# EUROPEAN PATENT APPLICATION

(11) **EP 3 836 269 A1**
(43) Date of publication of application: **16.06.2021**
(21) Application number: 20212218.0
(22) Date of filing: 07.12.2020
(51) Int. Cl.: H01M 10/04, H01M 10/052, H01M 10/0587, H01M 50/109, H01M 50/152, H01M 50/153, H01M 50/148, H01M 50/171, H01M 50/181, H01M 50/188, H01M 50/545, H01M 50/559

(54) **RECHARGEABLE BATTERY**

(30) Priority: 13.12.2019 KR 20190166885
(71) Applicant: Samsung SDI Co., Ltd., Yongin-si, Gyeonggi-do 17084 (KR)
(72) Inventor: Woo, Byongchul, 17084 Yongin-si, Gyeonggi-do (KR)
(74) Representative: Gulde & Partner

(57) **Abstract**

A rechargeable battery includes: an electrode assembly including first and second electrodes, a separator therebetween, first and second electrode tabs respectively connected to the first and second electrodes; a case accommodating the electrode assembly with the first electrode tab being connected thereto; and a cap assembly sealing an opening in the case. The cap assembly includes: a cap plate coupled to the case and covering the opening; and a terminal plate coupled to the cap plate. The terminal plate includes: a flange portion coupled to the cap plate and electrically insulated from the cap plate; and a tab connection portion protruding toward the electrode assembly from the flange portion, extending into a terminal opening in the cap plate, and being connected to the second electrode tab. An inner surface of the tab connection portion has a height difference with an inner surface of the cap plate.

## Description

### BACKGROUND

### 1. Field

Aspects of embodiment of the present invention relate to a rechargeable battery.

### 2. Description of Related Art

Different from a primary battery, which not designed to be recharged, a rechargeable battery (also referred to as a secondary battery) is designed to be repeatedly charged and discharged. A small-capacity rechargeable battery may be used in a small portable electronic device, such as a mobile phone, a notebook computer, and a camcorder, and a large-capacity rechargeable battery may be used as, for example, a motor driving power source for a hybrid vehicle and/or an electric vehicle.

Some examples of rechargeable batteries include nickel-cadmium (Ni-Cd) batteries, nickel-metal hydride (Ni-MH) batteries, lithium (Li) batteries, and lithium-ion (Li-ion) batteries. Lithium-ion rechargeable batteries have about three times higher operation voltage than nickel-cadmium batteries and nickel-metal hydride batteries, which are frequently used as portable electronic equipment power supplies. In addition, lithium-ion secondary batteries are widely used due to their relatively high energy density per unit weight.

As the demand for wearable devices, such as headphones, earphones, smartwatches, and body-mounted medical devices using Bluetooth increases, the need for ultra-small rechargeable batteries with high energy density is increasing.

Such ultra-small rechargeable batteries should secure a desired electrical capacity within a limited size, implement an efficient structure while improving effective weight, and improve structural stability.

The above information disclosed in this Background section is for enhancement of understanding of the background of the present invention, and therefore, it may contain information that is not prior art.

### SUMMARY

According to embodiments of the present invention, a rechargeable battery having a structure that prevents or substantially reduces the risk of a short circuit between an electrode tab connected to a terminal plate and a cap plate having polarity other than that of the electrode tab is provided.

According to an embodiment of the present invention, a rechargeable battery includes: an electrode assembly including a first electrode, a second electrode, a separator between the first electrode and the second electrode, a first electrode tab connected to the first electrode, and a second electrode tab connected to the second electrode, the electrode assembly having opposite first and second ends; a case accommodating the electrode assembly and facing the first end of the electrode assembly, the first electrode tab being connected to the case; and a cap assembly closing and sealing an opening in the case. The cap assembly includes: a cap plate coupled to the case, covering the opening, and facing the second end of the electrode assembly; and a terminal plate coupled to the cap plate. The terminal plate includes: a flange portion coupled to the cap plate and electrically insulated from the cap plate; and a tab connection portion protruding toward the electrode assembly from the flange portion, extending into a terminal opening in the cap plate, and being connected to the second electrode tab. An inner surface of the tab connection portion has a height difference with an inner surface of the cap plate. The distance of the inner surface of the tab connection portion to the second end of the electrode assembly is different the distance of the inner surface of the cap plate to the second end of the electrode assembly.

The inner surface of the tab connection portion may protrude farther toward the second end of the electrode assembly than the inner surface of the cap plate does, and a distal portion of the tab connection portion may be flat.

When the second end of the electrode assembly is a reference plane, a first height difference between the inner surface of the cap plate and the second end of the electrode assembly may be greater than a second height difference between the inner surface of the tab connection portion and the second end of the electrode assembly.

The inner surface of the tab connection portion facing the second electrode tab may protrude farther toward the second end of the electrode assembly than the inner surface of the cap plate does.

When the second end of the electrode assembly is a reference plane, a first height between the inner surface of the cap plate and the second end of the electrode assembly may be greater than a second height between the inner surface of the tab connection portion facing the second electrode tab and the second end of the electrode assembly.

The terminal plate may include stainless steel and may be formed by drawing-processing.

The flange portion may be parallel with the cap plate, and the tab connection portion may be recessed inward toward the case and may have a flat inner surface.

The rechargeable battery may further include an insulation member between the cap plate and the second electrode tab.

The insulation member may be plate-shaped and may have an opening therein. The opening in the insulation member may correspond to the terminal opening in the cap plate.

The opening in the insulation member may have a smaller diameter than that of the terminal opening.

A height is a distance between an outer plane of the case and the terminal plate when the opening in the case is closed and sealed by the cap assembly, a diameter is an exterior circumference of the case, and a height-to-diameter ratio may be less than or equal to 1.

The first electrode, the second electrode, and the separator may be spirally wound together.

The inner surface of the tab connection portion may have a curved plane shape that convexly protrudes toward the second end of the electrode assembly and may extend beyond the inner surface of the cap plate toward the second end of the electrode assembly.

The inner surface of the tab connection portion may have a partially spherical, hemispherical, partially ellipsoidal, or semi-ellipsoidal shape.

According to embodiments of the present invention, because an inner surface of a tab connection portion has a height difference with an inner surface of a cap plate, a short circuit between a second electrode tab connected to the tab connection portion of the terminal plate and the cap plate, which is connected to a first electrode tab having a polarity that is different from that of the second electrode tab, may be structurally prevented.

### BRIEF DESCRIPTION OF THE DRAWINGS

FIG. 1 is a perspective view of a rechargeable battery according to a first exemplary embodiment of the present invention.
FIG. 2 is an exploded perspective view of the rechargeable battery shown in FIG. 1.
FIG. 3 is a cross-sectional view taken along the line III-III of FIG. 1.
FIG. 4 is an exploded perspective view of a rechargeable battery according to a second exemplary embodiment of the present invention.
FIG. 5 is a cross-sectional view taken along the line V-V of FIG. 4.

### DETAILED DESCRIPTION

The present invention will be described more fully hereinafter with reference to the accompanying drawings, in which exemplary embodiments of the present invention are shown. As those skilled in the art would realize, the described embodiments may be modified in various different ways, all without departing from the scope of the present invention. Thus, the drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of," when preceding a list of elements, modify the entire list of elements and do not modify the individual elements of the list. Also, the term "exemplary" is intended to refer to an example or illustration. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing particular example embodiments of the present invention and is not intended to be limiting of the described example embodiments of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

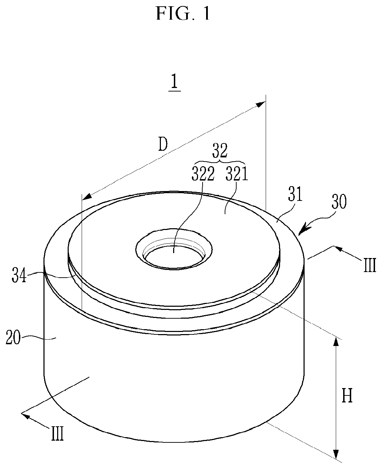

According to an exemplary embodiment of the present invention, an ultra-small rechargeable battery is provided. The ultra-small rechargeable battery may be a coin cell type battery or a button cell-type battery. The coin cell-type battery or button cell-type battery is a thin coin or button cell-type battery having a height (H) to diameter (D) ratio (H/D) of 1 or less (see, e.g., FIG. 1).

Because the coin cell-type battery or the button cell-type battery is generally cylindrical, the cross-section thereof in the horizontal direction is circular. The present invention, however, is not limited thereto, and a cross-section of the rechargeable battery in the horizontal direction may have an oval or polygonal shape. According to embodiments of the present invention, the diameter (D) is the maximum diameter (e.g., a maximum exterior diameter) of a case of the rechargeable battery in the horizontal direction, and the height (H) is the maximum distance between the case of the rechargeable battery and an outer plane of the terminal plate.

However, the coin cell-type battery or button cell-type battery is an example, and the present invention is not limited thereto. For example, the rechargeable battery may be a cylindrical or pin-type battery. Hereinafter, a coin cell-type battery or a button cell-type battery will be described, in detail, as an example embodiment.

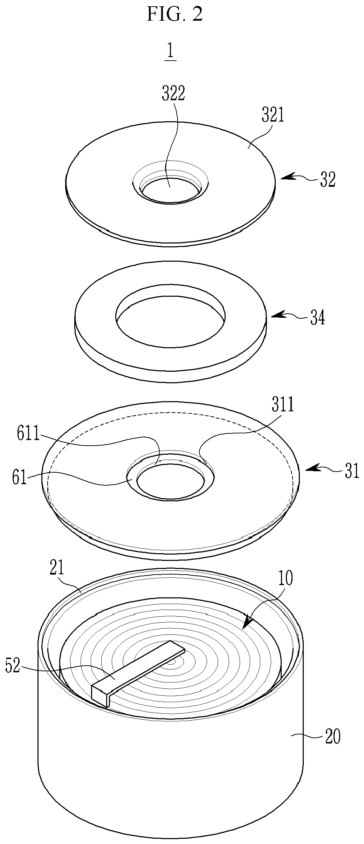

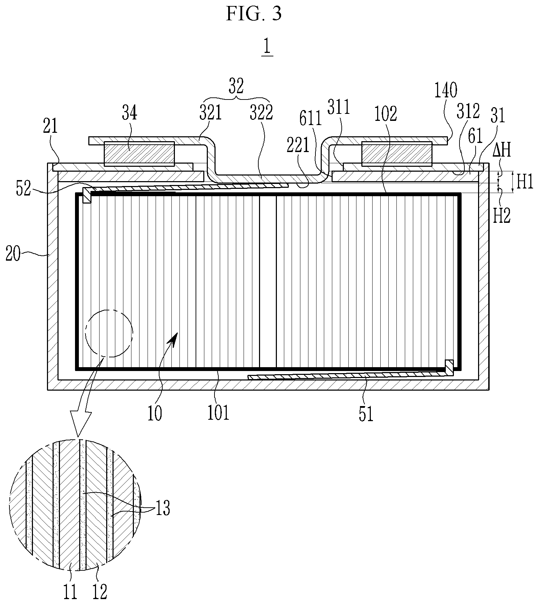

FIG. 1 is a perspective view of a rechargeable battery according to a first exemplary embodiment of the present invention, FIG. 2 is an exploded perspective view of the rechargeable battery shown in FIG. 1, and FIG. 3 is a cross-sectional view taken along the line III-III of FIG. 1.

Referring to FIGS. 1-3, a rechargeable battery 1 according to a first exemplary embodiment includes an electrode assembly 10, a case 20, and a cap assembly 30. The cap assembly 30 includes a cap plate 31 and a terminal plate 32. The cap plate 31 and the terminal plate 32 are heat-sealed (e.g., heat-sealed together) by a heat-sealing member 34 that is disposed therebetween.

The heat-sealing member 34 is a medium for coupling the cap plate 31 and the terminal plate 32 to each other. For example, the heat-sealing member 34 may include (or may be formed of) an electrically-insulating material, such as a polymer, and may be melted by using, for example, a laser to be sealed to both the cap plate 31 and the terminal plate 32.

In the first exemplary embodiment, the terminal plate 32 is coupled to the cap plate 31 by the heat-sealing member 34 such that a stable coupling structure is formed while effectively insulating between the terminal plate 32 and the cap plate 31 without a separate insulating element or configuration.

A coin cell-type battery that is manufactured as an ultra-small rechargeable battery has design limitations in terms of space, and accordingly, functionality should be secured while simplifying the structure and manufacturing process. Thus, in the first exemplary embodiment, insulation and coupling between the terminal plate 32 and the cap plate 31 are provided by the heat-sealing member 34.

The electrode assembly 10 includes a first electrode (e.g., a negative electrode) 11 and a second electrode (e.g., a positive electrode) 12, which are provided at opposite sides of a separator 13, which is an electrically-insulating member. The electrode assembly 10 is formed by spirally winding the first electrode 11, the separator 13, and the second electrode 12. Thus, the electrode assembly 10 may be formed as a jelly roll-type.

The electrode assembly 10 is configured to charge and discharge a current, and a spiral-wound axis of the electrode assembly 10 may be parallel with a height direction of the case 20. A first end (e.g., a lower end) 101 of the electrode assembly 10 and a second end (e.g., an upper end) 102 of the electrode assembly 10 may be flat and may be parallel with each other. In the first exemplary embodiment, the electrode assembly 10 does not have a center pin, but in other embodiments, a center pin may be provided on (or along) the spiral-wound axis (e.g., may be provided at a center of the electrode assembly 10).

The case 20 receives (or accommodates) the electrode assembly 10 and faces the first end 101 of the opposite ends 101, 102 of the electrode assembly 10. For example, the case 20 has a cylindrical shape and accommodates the jelly roll-type electrode assembly 10, and the cap assembly 30 closes and seals an opening 21 in the cylindrical case 20.

The electrode assembly 10 further includes a first electrode tab 51 connected to the first electrode 11 and a second electrode tab 52 connected to the second electrode 12. The first electrode 11 and the second electrode 12 are drawn out through (or drawn out to) the first end 101 and the second end 102 of the electrode assembly 10, respectively.

When the electrode assembly 10 is in the case 20, the first electrode tab 51 is electrically connected to the bottom of the case 20 and the second electrode tab 52 is electrically connected to the terminal plate 32 of the cap assembly 30.

In addition, the cap plate 31 of the cap assembly 30 is coupled to the case 20 while facing the second end 102 of the opposite ends 101, 102 of the electrode assembly 10 and, thus, covers and seals the opening 21 in the case 20. In this embodiment, the terminal plate 32 is connected to the second electrode tab 52 while being coupled to the cap plate 31.

Hereinafter, the first electrode 11 and the second electrode 12 are described as a negative electrode and a positive electrode, respectively, but the present invention is not limited thereto. For example, the first electrode 11 and the second electrode 12 may be a positive electrode and a negative electrode, respectively.

The first electrode (e.g., the negative electrode) 11 has a long band shape (e.g., a strip shape) and includes a current collector (e.g., a metal foil, such as a copper (Cu) foil) having a negative electrode coating portion, which is an area where a negative active material layer is applied, and a negative uncoated region, which is an area where an active material is not applied. The negative uncoated region may be positioned at one end of the negative electrode in the length direction.

The second electrode (e.g., the positive electrode) 12 has a long band shape (e.g., a strip shape) and includes a current collector (e.g., a metal foil, such as an aluminum (Al) foil) having a positive electrode coating portion, which is an area where a positive active material layer is applied, and a positive uncoated region, which is an area where an active material is not applied. The positive uncoated region may be positioned at one end of the positive electrode in the length direction.

The electrode assembly 10 is inserted into the case 20 through the opening (e.g., a circular-shaped opening) 21 formed in one side of the case 20, and the case 20 has a space (e.g., has sufficient space or is sufficiently sized) to receive (or accommodate) the electrode assembly 10 and an electrolyte solution therein. For example, the case 20 may have a cylindrical shape having a height (H) that is less than a diameter (D).

The terminal plate 32 of the cap assembly 30 has a flange portion 321 and a tab connection portion 322. The flange portion 321 is attached to the cap plate 31 while being electrically insulated therefrom. The tab connection portion 322 protrudes from the flange portion 321 toward the electrode assembly 10, extends into (e.g., is inserted into) a terminal opening (e.g., a terminal hole) 311 in the cap plate 31, and is connected to the second electrode tab 52 of the electrode assembly 10.

In this embodiment, an inner (or bottom) surface 221 of the tab connection portion 322 has a height difference ΔH from an inner (or bottom) surface 312 of the cap plate 31. The height difference ΔH provides a relatively large safety range that may help prevent a short circuit between the second electrode tab 52, which has positive polarity, and the cap plate 31, which has negative polarity, even when the second electrode tab 52 extends (e.g., is stretched) with a length margin between the second end 102 of the electrode assembly 10 and the inner surface 312 of the cap plate 31.

For example, the height difference ΔH may structurally prevent (or substantially prevent) a mutual short circuit between the second electrode tab 52 connected to the terminal plate 32, which has positive polarity, and the cap plate 31 connected to the first electrode tab 51, which has negative polarity.

For example, the inner surface 221 of the tab connection portion 322 protrudes farther toward the second end 102 of the electrode assembly 10 than the inner surface 312 of the cap plate 31 does and is formed flat (e.g., the inner surface 221 of the tab connection portion 322 is nearer to the second end 102 of the electrode assembly 10 than the inner surface 312 of the cap plate 31 is). When the second end 102 of the electrode assembly 10 is a reference plane, a first height H1 is formed between the inner surface 312 of the cap plate 31 and the second end 102 of the electrode assembly 10.

A second height H2 is formed between the flat inner surface 221 of the tab connection portion 322 and the second end 102 of the electrode assembly 10. The term "flat" may mean that the distance between the inner surface 221 of the tab connection portion 322 and the second end 102 of the electrode assembly 10 is substantially the same in the whole length of the inner surface 221 of the tab connection portion 322 as shown in Fig. 3. Because the second end 102 of the electrode assembly 10 is the reference plane, the second height H2 is smaller than the first height H1. That is, the height difference ΔH between the first height H1 and the second height H2 may structurally prevent a mutual short circuit between the second electrode tab 52 and the cap plate 31.

An insulation member 61 is disposed between the cap plate 31 and the second electrode tab 52. In the first exemplary embodiment, the insulation member 61 has a plate shape that corresponds to the cap plate 31 and may be disposed between (or only between) at least the cap plate 31 and the second electrode tab 52.

The insulation member 61 has an opening (e.g., a through-hole) 611 corresponding to (e.g., aligned or concentric with) the terminal opening 311. The opening 611 in the insulation member 61 may have a smaller diameter than the concentric terminal opening 311 in the cap plate 31. Therefore, the second electrode tab 52 may be further prevented from short-circuiting to the cap plate 31 through the terminal opening 311 by the insulation member 61.

For example, the terminal plate 32 may include (or may be formed of) stainless steel by drawing-processing using a plate having a thickness. The terminal plate 32 has the flange portion 321, which is parallel with the cap plate 31, and the tab connection portion 322, which is recessed from an outside of the case 20 toward the inside of the case 20 and has a flat inner surface 221. The flat inner surface 221 provides improved weldability to the second electrode tab 52.

In the first exemplary embodiment, the entire inner surface 221 of the tab connection portion 322 including the portion facing the second electrode tab 52 is formed in a plane.

In the rechargeable battery 1 according to the first exemplary embodiment, the height H is a maximum distance between an outer plane of the case 20 and the terminal plate 32, and the diameter D is an exterior diameter of the case 20 while the opening 21 in the case 20 is closed and sealed by the cap assembly 30. In this embodiment, a height H to diameter D ratio (H/D) is less than or equal to about 1 (H/D≤1). For example, the rechargeable battery 1 is a coin cell-type battery or a button cell-type battery, which can be formed in the shape of a thin coin or button.

Hereinafter, a second exemplary embodiment of the present invention will be described. Components in the second exemplary embodiment that are the same or substantially similar as those in the first exemplary embodiment may not be described again. Rather, the description of the second exemplary embodiment may focus on the different components therebetween.

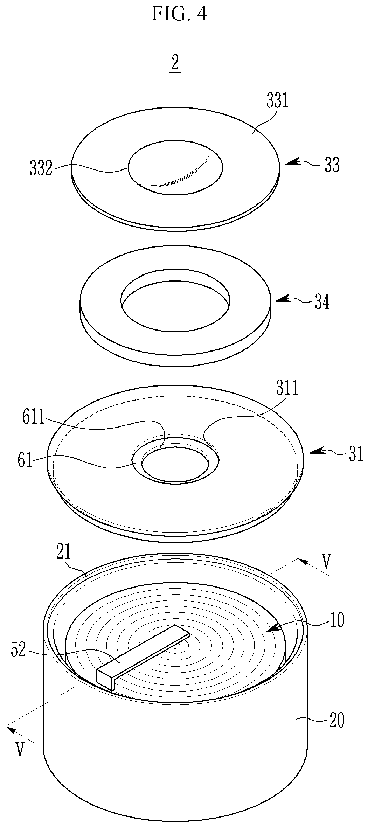

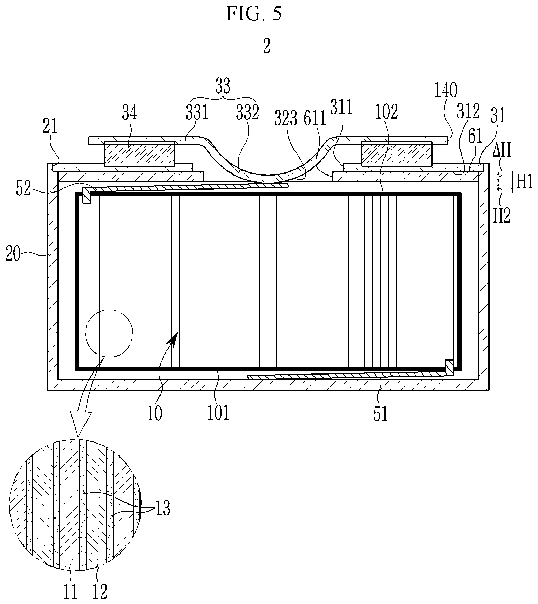

FIG. 4 is a perspective view of a rechargeable battery according to the second exemplary embodiment of the present invention, and FIG. 5 is a cross-sectional view taken along the line V-V of FIG. 4. Referring to FIGS. 4 and 5, the rechargeable battery 2 according to the second exemplary embodiment includes a terminal plate 33 having a flange portion 331 and a tab connection portion 332.

The flange portion 331 is formed parallel to the cap plate 31 and is attached to the cap plate 31 while being electrically insulated therefrom. The tab connection portion 332 convexly protrudes toward the electrode assembly 10 from the flange portion 331, extends into the terminal opening 311, and is connected to the second electrode tab 52 of the electrode assembly 10.

The tab connection portion 332 protrudes into the inside of the case 20, and an inner surface 323 of the tab connection portion 332 has a partially spherical, hemispherical, partially ellipsoidal, or semi-ellipsoidal shape. For example, the tab connection portion 332 may be a curved portion of a partial spherical cylinder, a curved portion of a hemispherical cylinder, a curved portion of a partial ellipsoidal cylinder, or a curved portion of a semi-elliptical cylinder and is connected to the flange portion 331.
In this embodiment, the inner surface 323 of the tab connection portion 332 has a height difference ΔH with the inner surface 312 of the cap plate 31. A first height H1 is formed between the inner surface 312 of the cap plate 31 and the second end 102 of the electrode assembly 10. A second height H2 is formed between the point of the inner surface 323 of the tab connection portion 332, which is the closest to the second end 102, and the second end 102 of the electrode assembly 10. The first height H1 is different from the second height H2, which forms the height difference ΔH as seen from Fig. 5. The height difference ΔH provides a relatively large safety range that may prevent (or substantially prevent) a short circuit between the second electrode tab 52 and the inner surface 312 of the cap plate 31 even when the second electrode tab 52 is stretched with a length margin between the second end 102 of the electrode assembly 10.

For example, the height difference ΔH may structurally prevent a mutual short circuit between the second electrode tab 52, which is connected to the terminal plate 32 and has positive polarity, and the cap plate 31, which is connected to a first electrode tab 51 and has negative polarity.

While the present invention has been described in connection with what is presently considered to be practical exemplary embodiments, it is to be understood that the present invention is not limited to the disclosed embodiments. This disclosure is intended to cover various modifications and equivalent arrangements included within the scope of the appended claims.

### <Description of Some Reference Symbols>

- 1:: rechargeable battery
- 10:: electrode assembly
- 11:: first electrode
- 12:: second electrode
- 13:: separator
- 20:: case
- 21:: opening
- 30:: cap assembly
- 31:: cap plate
- 32, 33:: terminal plate
- 51:: first electrode tab
- 52:: second electrode tab
- 61:: insulation member
- 101:: first end
- 102:: second end
- 221, 323:: inner surface
- 311:: terminal opening
- 312:: inner surface
- 321, 331:: flange portion
- 322, 332:: tab connection portion
- 611:: opening
- D:: diameter
- H:: height
- H1:: first height
- H2:: second height
- ΔH:: height difference

## Claims

1. A rechargeable battery comprising:
an electrode assembly (10) comprising a first electrode (11), a second electrode (12), a separator (13) between the first electrode and the second electrode, a first electrode tab (51) connected to the first electrode (11), and a second electrode tab (52) connected to the second electrode (12), the electrode assembly (10) having opposite first and second ends (101, 102);
a case (20) accommodating the electrode assembly (10) and facing the first end (101) of the electrode assembly (10), the first electrode tab (51) being connected to the case (20); and
a cap assembly (30) closing and sealing an opening of the case (20), the cap assembly (30) comprising:
a cap plate (31) coupled to the case (20), covering the opening, and facing the second end of the electrode assembly (10); and
a terminal plate (32) coupled to the cap plate (31),
wherein the terminal plate (32) comprises:
a flange portion (321) coupled to the cap plate (31) and electrically insulated from the cap plate (31); and
a tab connection portion (322) protruding toward the electrode assembly (10) from the flange portion, extending into a terminal opening in the cap plate (31), and being connected to the second electrode tab, and
wherein a height (H2) of an inner surface (221) of the tab connection portion (322) from the second end (102) of the electrode assembly (10) is different from a height (H1) of an inner surface (312) of the cap plate (31) from the second end (102) of the electrode assembly (10).

2. The rechargeable battery of claim 1, wherein the inner surface (221) of the tab connection portion (322) protrudes farther toward the second end (102) of the electrode assembly (10) than the inner surface (312) of the cap plate (31) does, and
wherein the inner surface (221) of the tab connection portion (322) is flat.

3. The rechargeable battery of claim 1 or 2, wherein, when the second end (102) of the electrode assembly (10) is a reference plane, a first height between the inner surface (312) of the cap plate (31) and the second end (102) of the electrode assembly (10) is greater than a second height between the inner surface of the tab connection portion (322) and the second end (102) of the electrode assembly (10).

4. The rechargeable battery of any of the preceding claims , wherein the inner surface (221) of the tab connection portion (322) facing the second electrode tab (52) protrudes farther toward the second end (102) of the electrode assembly (10) than the inner surface (312) of the cap plate (31) does.

5. The rechargeable battery of any of the preceding claims, wherein, when the second end (102) of the electrode assembly (10) is a reference plane, a first height between the inner surface of the cap plate (31) and the second end (102) of the electrode assembly is greater than a second height between the inner surface of the tab connection portion (322) facing the second electrode tab and the second end (102) of the electrode assembly (10).

6. The rechargeable battery of any of the preceding claims , wherein the terminal plate (32) comprises stainless steel and is formed by drawing-processing.

7. The rechargeable battery of any of the preceding claims , wherein the flange portion (321) is parallel with the cap plate (31), and
wherein the tab connection portion (322) is recessed inwardly toward the case (20) and has a flat inner surface (221).

8. The rechargeable battery of any of preceding claims 1, further comprising an insulation member (61) between the cap plate (31) and the second electrode tab (52).

9. The rechargeable battery of claim 8, wherein the insulation member (61) is plate-shaped and has an opening (611) therein, and
wherein the opening (611) in the insulation member (61) corresponds to the terminal opening (311) in the cap plate (31).

10. The rechargeable battery of claim 9, wherein the opening (611) in the insulation member (61) has a smaller diameter than that of the terminal opening (311).

11. The rechargeable battery of any of the preceding claims , wherein a height is a distance between an outer plane of the case (20) and the terminal plate (32) when the opening (21) of the case (20) is closed and sealed by the cap assembly (30),
wherein a diameter is an exterior diameter of the case (20), and
wherein a height-to-diameter ratio is less than or equal to 1.

12. The rechargeable battery of any of the preceding claims , wherein the first electrode (11), the second electrode (12), and the separator (13) are spirally wound together.

13. The rechargeable battery of any of claims 1, 6, and 8 to 12, wherein the inner surface (323) of the tab connection portion (332) has a curved plane shape that convexly protrudes toward the second end (102) of the electrode assembly (10) and extends beyond the inner surface of the cap plate (31) toward the second end (102) of the electrode assembly (10).

14. The rechargeable battery of claim 13, wherein the inner surface (323) of the tab connection portion (332) has a partially spherical, hemispherical, partially ellipsoidal, or semi-ellipsoidal shape.
